# EUROPÄISCHE PATENTSCHRIFT

(11) **EP 3 311 108 B1**
(45) Veröffentlichungstag und Bekanntmachung des Hinweises auf die Patenterteilung: **18.03.2020**
(21) Anmeldenummer: 16733897.9
(22) Anmeldetag: 15.06.2016
(51) Int. Cl.: G01B 11/16, G01D 5/353, G01L 1/00

(54) **VORRICHTUNG UND VERFAHREN ZUR BESTIMMUNG EINER DEFORMATION EINER DREIDIMENSIONALEN FLEXIBLEN STRUKTUR**
DEVICE AND METHOD FOR DETECTING A DEFORMATION OF A FLEXIBLE THREE-DIMENSIONAL STRUCTURE
DISPOSITIF ET PROCÉDÉ POUR LA DÉTERMINATION D'UNE DÉFORMATION D'UNE STRUCTURE FLEXIBLE TRIDIMENSIONNELLE

(30) Priorität: 16.06.2015 DE 102015211037
(43) Veröffentlichungstag der Anmeldung: 25.04.2018
(73) Patentinhaber: Karlsruher Institut für Technologie, 76131 Karlsruhe (DE)
(72) Erfinder: PAUER, Hendrikje, 71229 Leonberg (DE); LEDERMANN, Christoph, 76149 Karlsruhe (DE)
(74) Vertreter: Altmann Stößel Dick Patentanwälte PartG mbB
(86) Internationale Anmeldenummer: PCT/EP2016/063754
(87) Internationale Veröffentlichungsnummer: WO 2016/202857

(56) Entgegenhaltungen:
- US-A1- 2004 096 614
- US-A1- 2013 286 378

## Beschreibung

### Gebiet der Erfindung

Die Erfindung betrifft eine Vorrichtung und ein Verfahren zur Bestimmung einer Deformation einer dreidimensionalen, flexiblen Struktur in Form eines schlauchförmigen Gebildes. Die dreidimensionale, flexible Struktur kann hierbei in Form eines massiven Schlauches vorliegen oder die Form eines hohlen, schlauchförmigen Gebildes annehmen, welches derart über ein Objekt gezogen werden kann, dass das Objekt zumindest teilweise an der Innenseite des hohlen, schlauchförmigen Gebildes anliegt, um so die Deformation des eingebrachten Objekts bestimmen zu können.

### Stand der Technik

Aus dem Stand der Technik sind Vorrichtungen und Verfahren zur Bestimmung einer Deformation von dreidimensionalen, flexiblen Strukturen in Form von schlauchförmigen Gebilden bekannt. Hiermit lässt sich eine Form des schlauchförmigen Gebildes, welches mit Dehnmessstellen ausgestattet ist, erfassen. Derartige Vorrichtungen finden Einsatz insbesondere im Bereich der Robotik und der minimal-invasiven Chirurgie, wo sie als Sensor und zur Nachführung von flexiblen Instrumenten wie Endoskopen dienen.

US 7,781,724 B2 beschreibt eine Vorrichtung und ein Verfahren zur Bestimmung der Deformation eines dreidimensionalen, flexiblen Gebildes, welche über parallel, aber voneinander getrennt geführte Fasern verfügt, die jeweils mit hintereinander angeordneten Faser-Bragg-Gittern (FBG) als Dehnmessstellen ausgestattet sind. Zur Bestimmung der Deformation ist es erforderlich, dass mehrere Dehnmessstellen jeweils in einer Querschnittsebene senkrecht zu einer zentralen Achse liegen. Mittels der Dehnmessstellen wird so die Krümmung des Gebildes in Bezug auf die zentrale Achse ermittelt und hieraus die zugehörige Deformation bestimmt. Nachteilig hieran ist die parallele Führung der Fasern, welche einerseits eine hohe durchschnittliche Materialbelastung der Faser bewirken und aufgrund eines geringen Abstands der Fasern zur zentralen Achse der Struktur andererseits Auflösung und Messbereich des Sensors erheblich einschränken kann.

In US 7,772,541 B2 sind die Fasern nicht mit Faser-Bragg-Gittern (FBG) als Dehnmessstellen ausgestattet, sondern verfügen über kontinuierlich über den gesamten Verlauf eingebrachte Gitter oder nutzen natürliche Rayleigh-Streuung zur Dehnungsmessung. Aufgrund einer hohen Dichte an Dehnmessstellen lässt sich - bei einem höheren apparativen Aufwand - so zwar in der Regel eine höhere Auflösung bei der Bestimmung der Deformation erzielen, allerdings selbst auf Kosten der Auslesefrequenz.

US 2011/0109898 A1 offenbart eine Vorrichtung und ein Verfahren zur Bestimmung der Deformation eines dreidimensionalen, flexiblen Gebildes, welche eine mehradrige Faser aufweist, die helikal um die zentrale Achse der Struktur angeordnet sein kann. Auch hier werden jeweils mittels einer in jeder Ader liegenden Dehnmessstelle, welche in einer Querschnittsebene senkrecht zu der zentralen Achse angeordnet sind, die Krümmung ermittelt in Bezug auf die zentrale Achse und hieraus die Deformation des Gebildes im Bereich der Ebene bestimmt.

US 7,792, 405 B2 beschreibt ein Verfahren zur Herstellung einer Anordnung aus optischen Fasern innerhalb eines Hohlkabels. Hierzu wird zunächst eine Krümmung in dem Hohlkabel erzeugt, bevor die optischen Fasern in das Innere des Hohlkabels eingebracht und dort derart befestigt werden, dass sie einen möglichst kurzen Verlauf im Inneren des Hohlkabels nehmen.

US 2004/096614 A1 offenbart eine Vermessung einer dreidimensionalen Struktur mit Hilfe von Dehnungssensoren, wobei die Struktur 10 ein flexibles schlauchförmiges Gebilde mit einer als Schlauchwand dienenden Verbundschicht ist. Als Dehnungssensoren werden z.B. Lichtwellenleiter verwendet, die in die Verbundschicht eingelagert sind. Ferner können die zwei Lichtwellenleiter jeweils in einer helikalen Wicklung verlaufen. Jede Position des Lichtwellenleiters kann dabei als Dehnmessstelle angesehen werden. Weiterhin ist eine Auswerteeinrichtung vorgesehen, die aus den Messwerten an den Dehnmessstellen die Dehnung des Gebildes bestimmt.

Weitere Verfahren und Vorrichtungen zur Bestimmung einer Deformation von dreidimensionalen Strukturen sind aus US 2013/0286378 A1, US 2013/0094798 A, US 2012/ 0314988 A1 und US 2007/0201793 A1 bekannt. US 2013/0286378 A1 offenbart darüber hinaus eine helikale Anordnung von Lichtleitern. US 2007/0012872 A1 beschreibt ein Verfahren und eine Vorrichtung zur optischen Positionsbestimmung, während US 6,211,964 B1 einen faseroptischen akustischen Sensor offenbart. In WO 2014/101754A1 wird ein Sensor zur Bestimmung einer physikalischen Größe, aufweisend eine mehradrige optische Faser, beschrieben.

Die bekannten Vorrichtungen und Verfahren zur Bestimmung der Deformation von dreidimensionalen, flexiblen Strukturen in Form von schlauchförmigen Gebilden erfordern somit zu einer Bestimmung einer ebenen Deformation im dreidimensionalen Raum eine Ermittlung von Messwerten an mindestens zwei Dehnmessstellen oder zu einer Bestimmung einer beliebigen Deformation im dreidimensionalen Raum, welche auch eine Torsion des Gebildes einschließen kann, eine Ermittlung von Messwerten an mindestens drei Dehnmessstellen, wobei es erforderlich ist, dass die beiden bzw. die drei Dehnmessstellen in einer Querschnittsebene des Gebildes senkrecht zur zentralen Achse des Gebildes angeordnet sind. Um eine ausreichende Genauigkeit in der Bestimmung der Deformation erzielen zu können, ist hierzu jeweils eine möglichst genaue Platzierung der Dehnmessstellen in der Querschnittsebene nötig. Hierzu ist während der Herstellung eine möglichst exakte Positionierung der Dehnmessstellen in den Fasern des Gebildes erforderlich, wobei sich allerdings die Position der Dehnmessstellen im Laufe der Zeit durch Materialdrift unkontrollierbar verändern kann. Durch die Bestimmung der Deformation aus der Krümmung der Querschnittsebene in Bezug auf die zentrale Achse können hierbei erhebliche Messungenauigkeiten auftreten. Darüber sind viele Abschnitte in dem Gebilde, welche zwischen den Dehnmessstellen liegen, einer Beobachtung nicht zugänglich. Treten in den Abschnitten signifikante Änderungen in der Form des Gebildes auf, können dadurch Fehler in der Bestimmung der Deformation des Gebildes entstehen.

In H. Pauer, C. Ledermann und H. Woern, Motivation of a new Approach for Shape Reconstruction Based on FBG-Optical Fibers, Proceedings of IEEE Ninth International Conference on Intelligent Sensors, Sensor Networks and Information Processing (ISSNIP), 2014, wird daher ein Netzwerk von Dehnmessstellen aus FBG-Sensoren, welche zufällig über die dreidimensionale Struktur verteilt sind, vorgestellt. Zur Bestimmung der Dehnung wird vorgeschlagen, zunächst ein diskretes Tensor-Feld einzurichten, welches Werte für die Dehnung des Gebildes in Bezug auf die zentrale Achse an der Position der Dehnmessstellen aufnehmen kann. Um ein kontinuierliches Tensor-Feld zu erhalten, soll hieran anschließend eine Interpolation von Messinformation zwischen den Positionen der Dehnmessstellen erfolgen. Schließlich wird die Aufgabe angesprochen, dass das so erhaltene kontinuierliche Tensor-Feld für die Dehnung des Gebildes in ein kontinuierliches Tensor-Feld für die Deformation des Gebildes überführt werden müsse.

### Aufgabe der Erfindung

Ausgehend hiervon, besteht die Aufgabe der vorliegenden Erfindung darin, eine Vorrichtung und ein Verfahren zur Bestimmung einer Deformation einer dreidimensionalen, flexiblen Struktur in Form eines schlauchförmigen Gebildes bereitzustellen, welche die aufgeführten Nachteile und Einschränkungen des Standes der Technik zumindest teilweise überwinden. Insbesondere soll die Vorrichtung in der Lage sein, die Deformation des dreidimensionalen, flexiblen Gebildes mittels Dehnmessstellen, welche in möglichst wenigen Lichtwellenleitern angeordnet sind, mittels des Verfahrens auf möglichst einfache Weise mit einer hohen Genauigkeit zu bestimmen.

### Offenbarung der Erfindung

Diese Aufgabe wird durch eine Vorrichtung und ein Verfahren zur Bestimmung einer Deformation einer dreidimensionalen, flexiblen Struktur in Form eines schlauchförmigen Gebildes mit den Merkmalen der unabhängigen Patentansprüche gelöst. Vorteilhafte Weiterbildungen sind in den abhängigen Ansprüchen dargestellt.

In einem ersten Aspekt betrifft die vorliegende Erfindung eine Vorrichtung zur Bestimmung einer Deformation einer dreidimensionalen, flexiblen Struktur in Form eines schlauchförmigen Gebildes, insbesondere in Bezug auf eine Achse, vorzugsweise die zentrale Achse, eine Oberfläche und/oder ein Volumen des Gebildes. Unter der "zentralen Achse des Gebildes" wird hierbei eine gedachte Linie verstanden, welche derart durch das bevorzugt zylinderähnliche Gebilde verläuft, dass Punkte auf der zentralen Achse des Gebildes jeweils den größtmöglichen Abstand von den Punkten auf der äußeren Oberfläche des Gebildes aufweisen. Eine Bezugnahme der Deformation auf eine andere als die zentrale Achse des schlauchförmigen Gebildes ist jedoch denkbar. Unter der "Oberfläche" wird zumindest ein Teil derjenigen Fläche verstanden, welche das Gebilde nach außen begrenzt. Unter dem "Volumen" wird zumindest ein Teil des Raumes verstanden, welchen das Gebilde einnimmt.

Die Vorrichtung umfasst hierbei zumindest das schlauchförmige Gebilde und mindestens eine Auswerteeinrichtung, welche nachfolgend im Einzelnen beschrieben werden. Unter dem Begriff des "schlauchförmigen Gebildes" wird hierbei ein dreidimensionaler Körper mit einer äußeren Oberfläche verstanden, der in Form eines Schlauches ausgebildet ist und über eine Länge und über einen Querschnitt verfügt, welcher senkrecht zu einer zentralen Achse des Körpers angeordnet ist und über die Länge des Körpers konstant sein oder variieren kann. Der Querschnitt kann in Bezug auf die Oberfläche eine beliebige Form aufweisen, d.h. eine runde, eine ovale, eine mehreckige oder eine sonstige Form, wobei runde oder nur wenig von der runden Form abweichende ovale Formen bevorzugt sind. Je nach Einsatzzweck können - im Unterschied zu der beschriebenen zylinderähnlichen Form des Gebildes - auch andere Arten an Formen bevorzugt sein.

Das Gebilde ist flexibel, worunter - insbesondere im Gegensatz zu einem starren Gebilde, welches seine Form unter einer üblichen Art einer äußeren Krafteinwirkung beibehält - ein Körper zu verstehen ist, dessen Form reversibel anpassungsfähig an Art und Größe der äußeren Krafteinwirkung ist. Das flexible Gebilde ist somit insbesondere biegsam, kann Torsionen nachfolgen und bis zu einem gewissen Grad nachgiebig gegenüber einem, insbesondere senkrecht zu einer Oberfläche des Gebildes gerichteten äußeren Druckes sein. Der Begriff der "Deformation" bezeichnet somit eine in Folge einer auf das Gebilde gerichteten äußeren Krafteinwirkung hervorgerufene Änderung der dreidimensionalen Form des Gebildes, welche in einer Biegung des Gebildes und/oder in einer Torsion (Verdrillung) des Gebildes und/oder in einer räumlichen Veränderung an mindestens einem Punkt der Oberfläche des Gebildes (Eindellung oder Ausbuchtung) resultieren kann. Diese Art der Ausgestaltung des flexiblen Gebildes bildet die Grundlage für die nachfolgend beschriebene Funktion des Gebildes als Sensor für die Deformation der dreidimensionalen Struktur.

Das flexible, schlauchförmige Gebilde weist vorzugsweise einen flexiblen Trägerkörper auf, welcher über ein Trägermaterial verfügt, welches bevorzugt mindestens einen Kunststoff, insbesondere Polyethylen (PE), ein Poly(organo)silikat, ein anorganisch-organisches Hybridpolymer, oder mindestens eine Glasfaser umfasst. Je nach ausgewähltem Anwendungszweck sind weitere Trägermaterialen denkbar.

In den flexiblen Trägerkörper ist mindestens ein Lichtwellenleiter, bevorzugt eine Faser, insbesondere eine Glasfaser, eingebracht, welche in Form einer helikalen Wicklung innerhalb des flexiblen Trägerkörpers in dem schlauchförmigen Gebilde verläuft. Unter der "helikalen Wicklung" wird hierbei ein räumlicher Verlauf des Lichtwellenleiters in dem flexiblen Trägerkörper verstanden, welcher in Form einer schraubenförmigen Windung entlang der zentralen Achse des Gebildes verläuft. Durch Einsatz der helikalen Wicklung lassen sich hohe Belastungen der Lichtwellenleiter weitgehend vermeiden, welche bei einer konventionellen Längsführung der Lichtwellenleiter in dem Trägerkörper auftreten und sogar bis zu einem Bruch der Lichtwellenleiter führen können. Die Lichtwellenleiter können entlang ihres Verlaufs eine konstante Steigung für die Wicklung aufweisen. Bei einer geringen Steigung der Wicklung kann zwar eine geringere Belastung des Lichtwellenleiters erzielt werden, allerdings kann sich hierdurch eine niedrigere Signifikanz von Messwerten ergeben. Bei einer geringeren Steigung der Wicklung lassen sich so mehr Messpunkte über eine bestimmte Länge des schlauchförmigen Gebildes einbringen, was einerseits die Genauigkeit erhöhen kann, durch eine höhere Anzahl an Dehnmessstellen andererseits jedoch zu höheren Kosten führen kann. Alternativ kann daher die Steigung der Wicklung der Lichtwellenleiter vollständig oder nur in ausgewählten Abschnitten des Gebildes variieren. Ebenso ist eine festgelegte Variation über den Verlauf der Lichtwellenleiter in dem Gebilde denkbar, etwa darin, dass an wichtigen Stellen wie einem steuerbaren Kopf eines Endoskops eine geringere Wicklung ausgewählt wird als über den weiteren Verlauf des schlauchförmigen Gebildes.

Bevorzugt weist das schlauchförmige Gebilde nur einen einzigen Lichtwellenleiter auf, insbesondere um auf diese Weise einen möglichst einfachen und kostengünstigen Sensor bereitzustellen. In einer besonderen Ausgestaltung können, wie zum Beispiel unten beschrieben, in dem Trägerkörper jedoch mindestens zwei Lichtwellenleiter eingebracht sein, welche einen parallelen Verlauf in Bezug zueinander haben können. Allerdings kann auch eine nicht-parallele Führung der mindestens zwei Lichtwellenleiter zueinander von Vorteil sein, insbesondere da eine derartige Anordnung eine Belastung der Lichtwellenleiter bei der Deformation des Gebildes verringern kann. In einer besonderen Ausgestaltung können jedoch jeweils zwei der Lichtwellenleiter paarweise über eine gegenläufige helikale Wicklung zueinander verfügen. Darüber hinaus kann der Lichtwellenleiter nur in einer Richtung in das Gebilde eingebracht sein oder über eine Hinführung und eine Rückführung innerhalb des Trägerkörpers verfügen, wobei die Rückführung insbesondere eine in Bezug auf die Hinführung gegenläufige helikale Wicklung aufweisen kann.

Zur Erfüllung der oben beschriebenen Funktion als Sensor für die Deformation der dreidimensionalen Struktur weist der mindestens Lichtwellenleiter eine Vielzahl von Dehnmessstellen auf. Unter dem Begriff der "Dehnmessstelle" wird hierbei eine Einrichtung verstanden, welche dazu ausgestaltet ist, eine Dehnung an einem Punkt innerhalb des Gebildes zu ermitteln. Der Begriff der "Dehnung" bezeichnet hierbei eine relative Längenänderung an einem Ort, an welchem sich die zugehörige Dehnmessstelle befindet. Hierfür eignen sich grundsätzlich alle aus dem Stand der Technik bekannten Arten der Dehnmessstellen, insbesondere elektrische oder faseroptische Dehnmessstellen. Bevorzugt werden jedoch die eingangs erwähnten Faser-Bragg-Gitter (FBG) eingesetzt, worunter ein optisches Interferenzfilter verstanden wird, welches in den entsprechend ausgestalteten Lichtwellenleiter, insbesondere die Glasfaser, eingebracht ist. Das Interferenzfilter ist derart konfiguriert, dass es optische Wellen mit Wellenlängen, die innerhalb einer Filterbandbreite des Interferenzfilters liegen, reflektieren kann. Da sich bei einer Änderung der Temperatur und/oder einem Auftreten von Dehnung in dem Gebilde anhand der sich ändernden Geometrie des Lichtwellenleiters auch die reflektierte Wellenlänge ändert, lassen sich hiermit Änderungen der Temperatur und/oder das Auftreten der Dehnung in dem Lichtwellenleiter nachweisen. Zu einer ausschließlichen Bestimmung der Dehnung ist es daher vorteilhaft, eine möglichst konstante Temperatur während einer Messung einzustellen oder eine Kompensation von möglichen Temperaturänderungen mittels eines temperaturkompensierten FBG vorzunehmen. Ebenso eignen sich Lichtwellenleiter, welche über in den Mantel des Lichtwellenleiters eingebrachte Lichtkanäle und FGBs verfügen. Alternativ oder zusätzlich können auch andere geeignete Möglichkeiten, wie zum Beispiel eine Anwendung von Rayleigh-Streuung, ebenfalls als Dehnmessstelle eingesetzt werden. Zur Bestimmung von Messwerten bei einem Vorhandensein einer Vielzahl von Dehnmessstellen in einem einzelnen Lichtwellenleiter kann Multiplexing eingesetzt werden.

Die Vielzahl von Dehnmessstellen kann frei wählbar über ein oder mehrere Lichtwellenleiter verteilt sein. Es kann jedoch vorteilhaft sein, die Dehnmessstellen an besonders ausgewählten Punkten innerhalb des Lichtwellenleiters anzubringen, beispielsweise an Stellen, an welchen eine besonders starke Biegung des Gebildes, in welches der Lichtwellenleiter eingebracht ist, zu erwarten ist. Im Unterschied zu den aus dem Stand der Technik bekannten Vorrichtungen bestehen gemäß der vorliegenden Erfindung somit keine grundsätzlichen Vorgaben für eine erforderliche Platzierung der Dehnmessstellen in dem Verlauf des Lichtwellenleiters.

Wie oben erwähnt, umfasst die vorliegende Vorrichtung weiterhin mindestens eine Auswerteeinrichtung, welche dazu eingerichtet ist, um aus Messwerten aus der Vielzahl der Dehnmessstellen die Deformation des schlauchförmigen Gebildes, insbesondere in Bezug auf eine Achse, einer Oberfläche und/oder einem Volumen des Gebildes, zu bestimmen. Unter dem Begriff der "Auswerteeinrichtung" wird hierbei eine Einrichtung verstanden, welche, getrennt von dem schlauchförmigen Gebilde, mit diesem über eine oder mehrere Verbindungen, insbesondere drahtgebundene oder drahtlose Schnittstellen, verbunden ist, wobei die Verbindungen die Weiterleitung von Messwerten aus der Vielzahl von Dehnmessstellen an die Auswerteeinrichtung erlauben. Die Auswerteeinrichtung kann über einen oder mehrere integrierte Schaltkreise, insbesondere einen oder mehrere *applicationspecific integrated circuits* (ASICs), einen oder mehrere Datenverarbeitungsanlagen, bevorzugt ein oder mehrere Computer, Mikrocomputer oder Mikrocontroller verfügen. Ein Einsatz von zusätzlichen elektronischen Komponenten, insbesondere von Vorverstärkern, AD-Wandlern und/oder Filtern, ist denkbar. Darüber hinaus kann die Auswerteeinrichtung über einen oder mehrere weitere Sensoren verfügen oder mit einem oder mehreren weiteren Sensoren verbunden sein, die insbesondere zur Bestimmung der Temperatur ausgestattet sein können.

Die Auswerteeinrichtung kann weiterhin dazu eingerichtet sein, um mindestens ein Computerprogramm ausführen zu können, insbesondere ein Computerprogramm, welches einen oder mehrere Schritte des hier beschriebenen Verfahrens zur Bestimmung der Deformation des Gebildes ausführt oder unterstützt. Vorzugsweise können hierfür ein oder mehrere Algorithmen implementiert sein, welche unter Verwendung von Messwerten aus der Vielzahl der Dehnmessstellen die Deformation des schlauchförmigen Gebildes bestimmen können.

In einer besonders bevorzugten Ausgestaltung kann die Auswerteeinrichtung dazu eingerichtet sein, um eine aus den Messwerten der Deformation des schlauchförmigen Gebildes ermittelte Deformationsinformation zu einer Achse, einer Oberfläche und/oder einem Volumen des schlauchförmigen Gebildes in Beziehung zu setzen. Unter den Begriffen "Bezugnahme" oder "in Beziehung setzen" wird hierbei ein Aufbau einer Relation zwischen Werten der für die Oberfläche oder für das Volumen des schlauchförmigen Gebildes bestimmten Deformationsinformation mit Orten entlang einer Achse, einer Oberfläche oder einem Volumen in dem schlauchförmigen Gebilde verstanden, wobei die Relation Werte für die Deformation des schlauchförmigen Gebildes in Bezug zu der gewählten Achse oder Oberfläche oder zu dem gewählten Volumen bereitstellen kann.

Die Auswerteeinrichtung ist eingerichtet, um die Deformationsinformation aus Werten in Bezug auf die Deformation des schlauchförmigen Gebildes, welche lokal als Deformationsgradienten vorliegen, zu ermitteln. Unter dem Begriff des "Deformationsgradienten" wird hierbei eine räumliche Ableitung der Deformation in Bezug auf eine beliebige Richtung verstanden. Hierdurch kann die Auswerteeinrichtung eine Deformationsinformation für die Oberfläche (Mantelform) oder das Volumen des Gebildes ermitteln. Wie unten ausführlich dargestellt, kann unter Berücksichtigung der bekannten Geometrie des schlauchförmigen Gebildes hierzu der Formverlauf gemäß einer Achse parametrisiert werden, insbesondere in Bezug auf eine Achse, eine Oberfläche oder ein Volumen des Gebildes.

In einer weiteren, ebenfalls bevorzugten Ausgestaltung kann die Auswerteeinrichtung ferner dazu eingerichtet sein, um eine Zuordnung der Messwerte zu Punkten auf einer Oberfläche oder einem Volumen des schlauchförmigen Gebildes vorzunehmen. Hierzu kann die Auswerteeinrichtung die Messwerte, welche an einer Vielzahl von Dehnmessstellen in dem mindestens einen Lichtwellenleiter des Gebildes erfasst wurden, zu Punkten auf einer Oberfläche oder einem Volumen zuordnen, wobei jeder Punkt durch den jeweiligen Ort festgelegt ist, an welchem sich seine zugehörige Dehnmessstelle befindet. Im Gegensatz zu den aus dem Stand der Technik bekannten Vorrichtungen kann die Auswerteeinrichtung die erfassten Messwerte für die Dehnungen direkt zu den genannten Punkten in Beziehung setzen. Die Messwerte für die Dehnungen, welche jeweils eine relative Längenänderung an dem Ort bezeichnen, an dem sich die zugehörige Dehnmessstelle befindet, lassen sich daher auch als erste Richtungsableitung der Form des Gebildes interpretieren. Die hier durch die Auswerteeinrichtung bereitgestellte diskrete Messinformation entspricht somit einer lokalen Deformation der Form des Gebildes an den genannten Punkten.

In einer ersten, bevorzugten Ausgestaltung kann die flexible Struktur des dreidimensionalen Körpers in Form eines massiven Schlauches vorliegen, welcher insbesondere vollständig aus dem Trägerkörper und dem mindestens einen, hierin eingebrachten Lichtwellenleiter bestehen kann.

In einer weiteren, ebenfalls bevorzugten Ausgestaltung kann die flexible Struktur des dreidimensionalen Körpers die Form eines hohlen, schlauchförmigen Gebildes annehmen. Unter dieser Ausgestaltung wird eine Form des Gebildes verstanden, welche vorzugsweise über die gesamte Länge des Gebildes derart in Bezug auf die zentrale Achse des Gebildes ausgestaltet ist, dass sich in dem Trägerkörper mindestens ein Hohlraum befindet, welcher ganz oder teilweise mit einem Fluid oder, wie unten näher erläutert, mit einem Objekt ausfüllbar ist. Je nach gewünschter Ausgestaltung kann das schlauchförmige Gebilde hierbei einen oder mehrere Hohlräume, welche voneinander getrennt angeordnet und/oder mittels Kanälen miteinander verbunden sein können, aufweisen. Hierdurch kann das hohle, schlauchförmige Gebilde neben einer Außenseite auf der von der zentralen Achse des Gebildes wegweisenden äußeren Oberfläche des Gebildes zusätzlich eine Innenseite auf der zur zentralen Achse des Gebildes hinweisenden und durch den Hohlraum im Inneren des Gebildes ausgebildeten Oberfläche des Gebildes aufweisen. In dieser Ausgestaltung kann es vorteilhaft sein, den mindestens einen in den Trägerkörper des Gebildes eingebrachten Lichtwellenleiter in einem möglichst geringen Abstand von der Außenseite des Gebildes zu führen. In dieser Ausgestaltung kann außerdem die Auswerteeinrichtung dazu eingerichtet sein, um sowohl die Deformation auf der Außenseite des schlauchförmigen Gebildes als auch die Deformation auf der Innenseite des hohlen, schlauchförmigen Gebildes insbesondere in Bezug auf die zentrale Achse, welche in dieser Ausgestaltung teilweise oder vollständig in dem Hohlraum verlaufen kann, zu bestimmen. Auch in diesem Falle bestimmt sich die Lage der zentralen Achse des Gebildes ausschließlich aus der äußeren Oberfläche des Gebildes; die Innenseite bleibt hierbei außer Betracht.

In einer besonderen Ausgestaltung kann das hohle, schlauchförmige Gebilde dazu eingerichtet sein, um vollständig oder teilweise über ein Objekt, welches in den Hohlraum des schlauchförmigen Gebildes eingebracht werden kann, gezogen, insbesondere gestülpt, zu werden. Bei dem Objekt kann es sich hierbei um einen beliebigen Körper handeln, der über eine Oberfläche mit Außenmaßen verfügt, welche eine Einbringung in den Hohlraum des Gebildes mit der hohlen, schlauchförmigen Struktur ermöglichen. Hierbei kann das Objekt bevorzugt in Form eines länglichen Körpers, bevorzugt als rohrförmiges Objekt, ausgebildet sein und über eine Länge und über einen Querschnitt verfügen, der über die Länge des Körpers konstant sein oder variieren kann. Der Querschnitt des Objekts kann eine beliebige Form aufweisen, d.h. eine runde, eine ovale, eine mehreckige oder eine sonstige Form, wobei eine runde oder eine, nur wenig von der runden Form abweichende ovale Form bevorzugt ist. Je nach dem gewählten Einsatzzweck können - neben der besonders bevorzugten Form eines Rundrohres - auch andere Formen bevorzugt sein. Hierbei kann es sich bei dem Objekt auch um ein Messinstrument, einen Aktuator oder einen Teil davon handeln, welches bzw. welcher in den Hohlraum der vorliegenden Vorrichtung eingeführt oder um welches herum die Vorrichtung gestülpt werden kann.

In der vorliegenden Ausgestaltung kann das Objekt zumindest teilweise an der Innenseite des hohlen, schlauchförmigen Gebildes anliegen. In diesem Falle kann es besonders vorteilhaft sein, wenn das Objekt ebenfalls in Form eines flexiblen Körpers vorliegt und hierbei die Auswerteeinrichtung weiterhin dazu ausgestattet ist, um aus den Messwerten aus der Vielzahl der Dehnmessstellen die Deformation des in das hohle, schlauchförmige Gebilde eingebrachten flexiblen Objekts zu bestimmen. Mit anderen Worten: Das hohle, schlauchförmige Gebilde, welches über den mindestens einen Lichtwellenleiter zur Bestimmung der Deformation verfügt, kann auf diese Weise über die Bestimmung der Deformation der Innenseite des Gebildes gleichzeitig die Deformation des an der Innenseite des Gebildes anliegenden Objekts ermitteln. Diese Möglichkeit kann insbesondere dazu eingesetzt werden, um durch Umstülpen zumindest eines Teils des Objekts, welches über keine Lichtwellenleiter mit darin eingebrachten Dehnmessstellen verfügt oder verfügen kann, dennoch die Deformation des Objekts zumindest teilweise bestimmen zu können. Darüber hinaus kann die Auswerteeinrichtung die Deformationsinformationen in Bezug auf das innenliegende Objekt zusätzlich nutzen, etwa in Form von Signalen, die an Steuerungsmotoren, über welche das Objekt verfügen kann, abgegeben werden können.

In einer besonderen Ausgestaltung kann das schlauchförmige Gebilde, unabhängig davon ob es in Form eines massiven oder eines hohlen Körpers ausgestaltet ist, über mindestens zwei voneinander getrennte Schichten verfügen. Die Schichten, welche insbesondere jeweils in Form eines zylindrischen Ringes teilweise oder vollständig entlang der zentralen Achse des Gebildes verlaufen können, können vorzugsweise dasselbe oder auch ein unterschiedliches Trägermaterial aufweisen. Das schlauchförmige Gebilde kann hierbei in Bezug auf seine zentrale Achse über mindestens eine äußere Schicht, welche an die Außenseite des Gebildes angrenzt, verfügen. Die äußere Schicht kann hierbei zusätzlich ganz oder teilweise mit einer oder mehreren Schutzschichten versehen sein. Im Falle, dass das schlauchförmige Gebilde in Form eines hohlen Körpers vorliegt, kann darüber hinaus eine innere Schicht, welche an die Innenseite des hohlen, schlauchförmigen Gebildes angrenzt, vorhanden sein. In jeder der mindestens zwei Schichten kann jeweils mindestens eine der Lichtwellenleiter verlaufen. Andere Arten der Ausgestaltung für die mindestens zwei Schichten sind jedoch denkbar.

In einer besonders bevorzugten Ausgestaltung kann hierbei die äußere Schicht verschiebbar gegenüber der inneren Schicht gelagert sein. In dieser Ausgestaltung kann die innere Schicht, etwa durch eine Anwendung eines zwischen die beiden Schichten eingebrachten Films aus Gleitflüssigkeit, derart von der äußeren Schicht entkoppelt sein, dass eine Übertragung einer Torsion von der äußeren Schicht auf die innere Schicht vermieden werden kann, wodurch eine torsionsfreie Messung der Form möglich wird.

In einer bevorzugten Ausgestaltung kann es vorteilhaft sein, wenn die Auswerteeinrichtung weiterhin dazu eingerichtet ist, um aus den Messwerten aus der Vielzahl der Dehnmessstellen einen äußeren Druck auf das schlauchförmige Gebilde bestimmen zu können. Dies kann insbesondere durch Aufnahme der Messwerte aus den Dehnmessstellen in dem Lichtwellenleiter der äußeren Schicht, welche in dieser Ausgestaltung zusätzlich den äußeren Druck miterfassen, unter Berücksichtigung der Messwerte aus den Dehnmessstellen in dem Lichtwellenleiter der inneren Schicht, auf die der äußere Druck keinen Einfluss hat, erfolgen, etwa durch eine geeignete Differenzbildung, welche in der Auswerteeinrichtung vorgenommen kann. Alternativ können hierfür zwei Lichtwellenleiter vorgesehen sein, die innerhalb derselben Schicht verlaufen. Hierzu können die beiden Lichtwellenleiter für die Bestimmung der Form redundant ausgeführt werden, so dass bei einer zunächst ausschließlichen Betrachtung, dass sich die Deformationen aus Krümmungen des Gebildes ergeben würden, widersprüchliche Ergebnisse erhalten werden können, welche sich aber durch eine zusätzliche Berücksichtigung des äußeren Drucks auf das Gebilde auflösen lassen.

In dieser Ausgestaltung kann die vorliegende Vorrichtung auch als taktile Haut dienen. Unter dem Begriff der "taktilen Haut" wird hierbei eine technische Einrichtung verstanden, welche über eine Oberflächensensibilität verfügt, die - analog zur menschlichen oder tierischen Haut - eine Erfassung eines Druckes, von Vibrationen und/oder der Temperatur ermöglicht. In dieser Ausgestaltung kann die vorliegende Vorrichtung dazu eingesetzt werden, um, vorzugsweise gleichzeitig, als Deformationssensor und/oder als Oberflächensensor zu fungieren. Ein getrennter Einsatz für beiden Funktionsbereiche kann jedoch ebenfalls erfolgen, etwa indem die äußere Schicht dazu dient, um den Einfluss des äußeren Drucks auf die Bestimmung der Deformation möglichst weitgehend auszuschließen.

In einem weiteren Aspekt umfasst die vorliegende Erfindung ein Verfahren zur Bestimmung der Deformation einer dreidimensionalen, flexiblen Struktur in Form eines schlauchförmigen Gebildes. Hierbei werden Messwerte an einer Vielzahl von Dehnmessstellen erfasst und an mindestens eine Auswerteeinrichtung weitergeleitet. Wie oben beschrieben, befinden sich die Dehnmessstellen in mindestens einem, in Form einer helikalen Wicklung in das schlauchförmige Gebilde eingebrachten Lichtwellenleiter. Mittels der Auswerteeinrichtung wird aus den erfassten Messwerten die Deformation des schlauchförmigen Gebildes, insbesondere in Bezug auf eine Achse, bevorzugt die zentrale Achse, eine Oberfläche und/oder ein Volumen des Gebildes, bestimmt.

In einer besonders bevorzugten Ausgestaltung umfasst das vorliegende Verfahren hierbei die folgenden Schritte, welche vorzugsweise in der angegebenen Reihenfolge, beginnend mit Schritt a) und endend mit Schritt d), durchgeführt werden, wobei ein oder mehrere, insbesondere aufeinanderfolgende Schritte, auch zumindest teilweise gleichzeitig ausgeführt werden können:
a) Zuordnen der Messwerte zu Punkten auf einer Oberfläche oder einem Volumen;
b) Interpolieren von Messinformation zwischen den Punkten auf der Oberfläche oder in dem Volumen;
c) Bestimmen von Deformationsgradienten aus der Messinformation, wodurch eine Deformationsinformation für die Oberfläche oder das Volumen des schlauchförmigen Gebildes erhalten wird;
d) In Beziehung setzen der Deformationsinformation zu der Achse, der Oberfläche und/oder dem Volumen des schlauchförmigen Gebildes.

Gemäß Schritt a) werden die Messwerte, welche an einer Vielzahl von Dehnmessstellen in dem mindestens einen Lichtwellenleiter des Gebildes erfasst wurden, zu Punkten auf einer Oberfläche oder einem Volumen zugeordnet, wobei jeder Punkt durch den jeweiligen Ort festgelegt ist, an welchem sich seine zugehörige Dehnmessstelle befindet. Im Gegensatz zu den aus dem Stand der Technik bekannten Verfahren werden hier die erfassten Messwerte für die Dehnungen nicht dazu eingesetzt, um eine oder mehrere Krümmungen der Querschnittsebene, in welcher sich die betrachteten Dehnmessstellen befinden, zu ermitteln, sondern die erfassten Messwerte für die Dehnungen werden direkt zu den genannten Punkten in Beziehung gesetzt. Die Messwerte für die Dehnungen, welche jeweils eine relative Längenänderung an dem Ort bezeichnen, an dem sich die zugehörige Dehnmessstelle befindet, lassen sich daher auch als erste Richtungsableitung der Form des Gebildes interpretieren. Die hierdurch gemäß Schritt a) gewonnene diskrete Messinformation entspricht somit einer lokalen Deformation der Form des Gebildes an den genannten Punkten.

Insbesondere um auch zwischen den in Schritt a) genannten Punkten eine Messinformation zu erhalten, erfolgt gemäß Schritt b) ein Interpolieren der Messinformation zwischen den Punkten auf der Oberfläche oder in dem Volumen. In einer bevorzugten Ausgestaltung können die diskreten lokalen Dehnungen, insbesondere mittels einer Verwendung von Splines über die gesamte Oberfläche oder über das gesamte Volumen derart interpoliert werden, dass ein dichtes Netz an Messinformation für die Dehnungen erhalten werden kann. Durch eine Wahl eines Grades, der Wahl einer Basisfunktion und/oder einer Wertebelegung von Parametern lassen sich die Splines hierbei individuell an die Deformationseigenschaften des Materials, über welches der Trägerkörper verfügen kann, anpassen.

Gemäß Schritt c) können unter Verwendung des dichten Netzes an Messinformation für die Dehnungen aus Schritt b) Deformationsgradienten auch an Orten zwischen den Punkten auf der Oberfläche oder in dem Volumen bestimmt werden. Unter dem Begriff des "Deformationsgradienten" wird hierbei eine räumliche Ableitung der Deformation in Bezug auf eine beliebige Richtung verstanden. Hierdurch lässt sich eine Deformationsinformation für die Oberfläche (Mantelform) oder das Volumen des Gebildes ermitteln. Unter dem Begriff der "Deformationsinformation" werden hierbei Werte in Bezug auf die Deformation des Gebildes verstanden, welche lokal als Deformationsgradienten vorliegen.

Erst im Verlauf des Schrittes d) erfolgt nunmehr eine Bezugnahme der für die Oberfläche oder das Volumen des Gebildes bestimmten Deformationsinformation auf einen Formverlauf, welcher sich auf die Achse, insbesondere die zentrale Achse, eine Oberfläche und/ein Volumen des schlauchförmigen Gebildes beziehen kann. Unter den Begriffen "Bezugnahme" oder "in Beziehung setzen" wird hierbei ein Aufbau einer Relation zwischen Werten der für die Oberfläche oder für das Volumen des schlauchförmigen Gebildes bestimmten Deformationsinformation mit Orten entlang einer Achse, einer Oberfläche oder einem Volumen in dem schlauchförmigen Gebilde verstanden, wobei die Relation Werte für die Deformation des schlauchförmigen Gebildes in Bezug zu der gewählten Achse oder Oberfläche oder zu dem gewählten Volumen bereitstellen kann.

Unter Berücksichtigung der bekannten Geometrie des schlauchförmigen Gebildes kann hierzu der Formverlauf parametrisiert werden, für den Fall eines Bezugs auf die zentrale Achse vorzugsweise nach der Bogenlänge der zentralen Achse. Auf diese Weise kann schließlich die Deformation des schlauchförmigen Gebildes vorzugsweise aus dem Formverlauf der zentralen Achse des Gebildes bestimmt werden, insbesondere indem der Formverlauf in Bezug auf die zentrale Achse in Beziehung zu einem bezüglich der zentralen Achse vorgegebenen Formverlauf gesetzt wird, beispielsweise durch Differenzbildung zwischen entsprechenden Punkten auf der Oberfläche oder in dem Volumen des Gebildes aus den jeweiligen Formverläufen. Eine Bezugnahme auf eine andere Achse als die zentrale Achse ist denkbar. Alternativ oder zusätzlich kann eine Beziehung zwischen der Deformation und einer Oberfläche des Gebildes hergestellt werden, was insbesondere für einen Fall einer auf das Gebilde gerichteten äußeren Krafteinwirkung hervorgerufenen räumlichen Veränderung an mindestens einem Punkt der Oberfläche des Gebildes, etwa in Form einer Eindellung oder Ausbeulung, vorteilhaft sein kann. Alternativ oder zusätzlich kann eine Beziehung zwischen der Deformation und einem Volumen des Gebildes hergestellt werden, vorzugsweise für den Fall einer räumlichen Veränderung eines Materialparameters, etwa einer Dichte oder einer Temperatur, innerhalb des Trägerkörpers.

In einer besonderen Ausgestaltung kann, wie oben beschrieben, das schlauchförmige Gebilde einen Hohlraum oder mehrere Hohlräume in Bezug auf die Achse des Gebildes aufweisen, wobei die mehreren Hohlräume voneinander getrennt angeordnet und/oder mittels Kanälen miteinander verbunden sein können. In diesem Falle kann die Auswerteeinrichtung zusätzlich die Deformation des hohlen, schlauchförmigen Gebildes auf der Innenseite des hohlen, schlauchförmigen Gebildes bestimmen.

In einer weiteren Ausgestaltung kann, wie oben beschrieben, das schlauchförmige Gebilde über mindestens zwei voneinander getrennte Schichten verfügen. In dieser Ausgestaltung kann in jeder der mindestens zwei Schichten jeweils mindestens einer der Lichtwellenleiter verlaufen. Dadurch können in Dehnmessstellen in einem in einer äußeren Schicht auf einer Außenseite des schlauchförmigen Gebildes verlaufenden Lichtwellenleiter zusätzlich Messwerte aufgenommen und an die Auswerteeinrichtung weitergeleitet werden können. Aus diesen zusätzlichen Messwerten kann die Auswerteeinrichtung insbesondere einen äußeren Druck auf das schlauchförmige Gebilde bestimmen.

Für weitere Einzelheiten in Bezug auf das vorliegende Verfahren wird auf die Beschreibung der erfindungsgemäßen Vorrichtung verwiesen.

### Vorteile der Erfindung

Die vorliegende Erfindung weist eine Reihe von Vorteilen gegenüber den aus dem Stand der Technik bekannten Vorrichtungen und Verfahren zur Bestimmung einer Deformation einer dreidimensionalen, flexiblen Struktur in Form eines schlauchförmigen Gebildes auf. Es wird eine nahezu frei wählbare Führung der einen oder mehreren Lichtwellenleiter, in welchen die Dehnmessstellen eingebracht sind, ermöglicht. Auf diese Weise kann die vorliegende Vorrichtung auf wesentlich einfachere Weise hergestellt werden. Einerseits sind die Anforderungen an eine Positionsgenauigkeit geringer, da keine gemeinsame Schnittebene für mehrere Dehnmessstellen erforderlich ist. Positionsungenauigkeiten lassen sich auch noch später eliminieren, indem die Positionen der Dehnmessstellen nach Herstellung des Sensors ermittelt werden. Ebenso lässt sich die Auswertung der Messwerte an die ermittelten Positionen der Dehnmessstellen und etwaige, durch Materialverschleiß aufgetretene Positionsveränderungen anpassen. Darüber hinaus genügt es, auch Lichtwellenleiter mit voneinander getrennten Dehnmessstellen, etwa in Form von separierten FGB-Gittern, einzusetzen und trotzdem gute Resultate zu erzielen; eine möglichst kontinuierliche Anbringung von Dehnmessstellen innerhalb der Länge eines Lichtwellenleiters ist nicht erforderlich. Einerseits kann die Anzahl der Lichtwellenleiter in der Vorrichtung verringert werden, wodurch sich Aufwand und Kosten reduzieren lassen. Die helikale Art der Führung der Lichtwellenleiter führt zu einer geringeren Belastung der einzelnen Lichtwellenleiter, wodurch das Risiko eines Faserbruchs verringert und die Flexibilität der Lichtwellenleiter erhöht werden können. Aufgrund eines geringen Messausschlags lässt sich so der Messbereich leichter einhalten, wodurch sich bei Multiplexing auftretende unterschiedliche reflektierte Wellenlängen weniger überschneiden, was andererseits eine erhöhte Zahl an Dehnmessstellen auf einem einzelnen Lichtwellenleiter ermöglicht.

Die Ausgestaltung der vorliegenden Vorrichtung erlaubt eine Bereitstellung eines hohlen, schlauchförmigen Gebildes, wodurch sich ein Deformationssensor ergibt, welcher über ein zu vermessendes Objekt gestülpt werden kann. Vorzugsweise kann die Vorrichtung zudem gleichzeitig auch als eine taktile Haut eingesetzt werden. Somit lassen sich mit dem vorliegenden Sensor zusätzlich zu dreidimensionalen massiven Objekte auch Oberflächen als zweidimensionale Objekte vermessen.

Durch die vorliegende Bestimmung der Deformation auf der Basis von ermittelten Messwerten für die Dehnungen anstelle von ermittelten Krümmungen lassen sich auch in numerischer Hinsicht Vorteile erzielen. Dadurch kann insbesondere auf eine Integration verzichtet werden, wodurch einerseits Rechenfehler aufgrund von Rundungen vermieden werden können und andererseits das Verfahren insgesamt beschleunigt werden kann und insbesondere auch in Echtzeit durchgeführt werden kann.

Neben Anwendungen insbesondere im Bereich der Robotik, etwa in integrierten flexiblen Gelenken, sowie in der minimal-invasiven Chirurgie als Sensor und zur Nachführung von flexiblen Instrumenten wie Endoskopen, ist auch ein Einsatz in Tiefseekabeln sowie in der Spiel- und Unterhaltungsindustrie denkbar.

### Kurze Beschreibung der Figuren

Weitere Einzelheiten und Merkmale der vorliegenden Erfindung ergeben sich aus der nachfolgenden Beschreibung eines bevorzugten Ausführungsbeispiels, insbesondere in Verbindung mit den abhängigen Ansprüchen. Die Erfindung ist nicht auf die Ausführungsbeispiele beschränkt.

Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Im Einzelnen zeigen:
- Figur 1: eine schematische, perspektivische Darstellung eines Vergleichsbeispiels für eine Vorrichtung zur Bestimmung einer Deformation einer dreidimensionalen, flexiblen Struktur, welche ein massives, schlauchförmiges Gebilde umfasst (nicht Gegenstand des Anspruchssatzes);
- Figur 2: eine schematische, perspektivische Darstellung eines ersten Ausführungsbeispiels für die Vorrichtung zur Bestimmung der Deformation einer dreidimensionalen, flexiblen Struktur, welche ein hohles, schlauchförmiges Gebilde umfasst;
- Figur 3: eine schematische Darstellung eines Querschnitts eines weiteren Ausführungsbeispiels für die Vorrichtung zur Bestimmung der Deformation einer dreidimensionalen, flexiblen Struktur, welche ein hohles, schlauchförmiges Gebilde umfasst, das über zwei voneinander getrennte Schichten verfügt; und
- Figur 4: eine schematische Darstellung eines Ausführungsbeispiels für ein Verfahren zur Bestimmung der Deformation einer dreidimensionalen, flexiblen Struktur.

### Beschreibung des Vergleichsbeispiels und der Ausführungsbeispiele

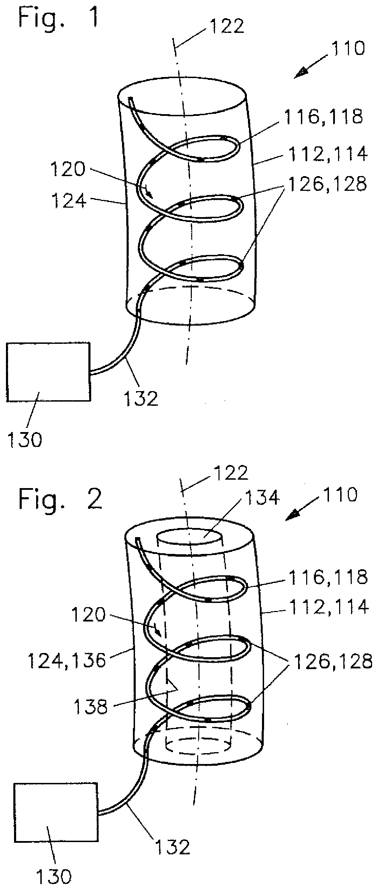

Figur 1 zeigt schematisch in perspektivischer Darstellung ein Vergleichsbeispiel für eine Vorrichtung 110 zur Bestimmung einer Deformation einer dreidimensionalen, flexiblen Struktur, die nicht vom Anspruchssatz umfasst wird. In dem vorgestellten Vergleichsbeispiel umfasst die Vorrichtung 110 ein massives, schlauchförmiges Gebilde 112, welches einen flexiblen Trägerkörper 114 aufweist, der über einen Kunststoff, vorzugsweise Polyethylen (PE), als Trägermaterial verfügt. Andere Trägermaterialien für den flexiblen Trägerkörper 114 sind jedoch denkbar.

In das schlauchförmige Gebilde 112 ist im vorliegenden Vergleichsbeispiel beispielhaft ein einziger Lichtwellenleiter 116 eingebracht, welcher in Form einer helikalen Wicklung 118 innerhalb des schlauchförmigen Gebildes 112 verläuft. Alternativ können auch zwei oder mehrere Lichtwellenleiter 116 in das schlauchförmige Gebilde 112 eingebracht werden. Die helikale Wicklung 118 beschreibt hierbei einen räumlichen Verlauf 120 des Lichtwellenleiters 116 in dem flexiblen Trägerkörper 114 in Form einer schraubenförmigen Windung entlang einer zentralen Achse 122. Unter der zentralen Achse 122 des schlauchförmigen Gebildes 112 wird hierbei eine gedachte Linie verstanden, welche derart durch das schlauchförmige Gebilde 112 verläuft, dass Punkte auf der zentralen Achse 122 jeweils den größtmöglichen Abstand von Punkten auf der äußeren Oberfläche 124 des schlauchförmigen Gebildes 112 aufweisen. Durch Einsatz der helikalen Wicklung 118 lässt sich eine hohe Belastung des Lichtwellenleiters 116 weitgehend vermeiden. Der Lichtwellenleiter 116 weist im vorliegenden Vergleichsbeispiel eine konstante Steigung für die helikale Wicklung 118 entlang ihres Verlaufs 120 auf. Alternativ kann die Steigung der helikalen Wicklung 118 des Lichtwellenleiters 116 vollständig oder nur in ausgewählten Abschnitten des schlauchförmigen Gebildes 112 variieren. Zusätzlich kann der Lichtwellenleiter 116 über eine Rückführung innerhalb des Trägerkörpers 114 verfügen (nicht dargestellt).

Bei dem Lichtwellenleiter 116 handelt es sich vorzugsweise um eine Glasfaser; andere, vorzugsweise transparente Materialien sind jedoch möglich. Der Lichtwellenleiter 116 dient als faseroptischer Sensor und verfügt daher über eine Vielzahl von Dehnmessstellen 126, welche im vorliegenden Fall als Faser-Bragg-Gitter (FBG) 128 ausgestaltet sind und aus denen jeweils mittels eines Einsatzes von Multiplexing Messwerte erhalten werden können. Die Vielzahl von Dehnmessstellen 126 ist im vorliegenden Vergleichsbeispiel in etwa gleichen Abständen entlang des Verlaufs 120 des Lichtwellenleiters 116 über den Lichtwellenleiter 116 verteilt; andere, auch frei wählbare entlang des Verlaufs 120 des Lichtwellenleiters 116 sind jedoch möglich; insbesondere Verteilungen, bei welchen die Dehnmessstellen 126 an Stellen innerhalb des Lichtwellenleiters 116 angebracht sind, an denen eine besonders starke Biegung des schlauchförmigen Gebildes 112 erwartet wird.

Die Vorrichtung weist ferner eine Auswerteeinrichtung 130 auf, welche dazu eingerichtet ist, um aus den Messwerten, welche durch die Vielzahl der Dehnmessstellen 126 bereitgestellt werden, die Deformation des schlauchförmigen Gebildes 112 in Bezug auf die zentrale Achse 122 schlauchförmigen Gebildes 112 zu bestimmen. Zu diesem Zweck verfügt die von dem schlauchförmigen Gebilde 112 getrennte Auswerteeinrichtung 130 über eine Verbindung 132, welche im vorliegenden Falle als drahtgebundene Schnittstellen ausgestaltet ist, jedoch auch als drahtlose Schnittstellen ausgestaltet sein kann, zu dem Lichtwellenleiter 116. Die Verbindung 132 erlaubt hierbei insbesondere die Weiterleitung der Messwerte aus der Vielzahl der Dehnmessstellen 126 an die Auswerteeinrichtung 130. Die Auswerteeinrichtung 130 ist in diesem Vergleichsbeispiel weiterhin dazu eingerichtet, um ein oder mehrere Computerprogramme ausführen zu können, welche die Schritte des hier beschriebenen Verfahrens zur Bestimmung der Deformation des schlauchförmigen Gebildes 112 ausführen. Hierzu sind geeignete Algorithmen implementiert, welche es erlauben, unter Verwendung der Messwerte aus der Vielzahl der Dehnmessstellen 126 die Deformation des schlauchförmigen Gebildes 112 in Bezug auf eine Achse, vorzugsweise die zentrale Achse 122, auf eine Oberfläche und/oder auf ein Volumen des schlauchförmigen Gebildes 112 zu bestimmen.

Figur 2 zeigt schematisch in perspektivischer Darstellung ein erstes Ausführungsbeispiel für die Vorrichtung 110 zur Bestimmung einer Deformation einer dreidimensionalen, flexiblen Struktur. In dem ersten Ausführungsbeispiel ist in den flexiblen Trägerkörper 114 über die gesamte Länge des schlauchförmigen Gebildes 112 in Bezug auf die zentrale Achse 122 ein Hohlraum 134 eingebracht, welcher ganz oder teilweise mit einem Fluid oder mit einem Objekt ausfüllbar ist. Dadurch weist das hohle, schlauchförmige Gebilde 112 neben einer Außenseite 136 auf der äußeren Oberfläche 124 des Trägerkörpers 114 auch eine Innenseite 138 auf, welche durch die in dem Hohlraum 134 im Inneren des Trägerkörpers 114 ausgebildeten Oberfläche des Trägerkörpers 114 festgelegt ist.

In dieser Ausgestaltung kann die Auswerteeinrichtung 130 dazu eingerichtet sein, um sowohl die Deformation auf der Außenseite 136 des schlauchförmigen Gebildes 112 als auch die Deformation auf der Innenseite 138 des hohlen, schlauchförmigen Gebildes 112, jeweils vorzugsweise in Bezug auf die zentrale Achse 122, welche in dieser Ausgestaltung vollständig innerhalb des Hohlraums 134 verläuft, zu bestimmen. Auch in diesem Falle bestimmt sich die Lage der zentralen Achse 122 des schlauchförmigen Gebildes 112 ausschließlich aus der äußeren Oberfläche 124 des schlauchförmigen Gebildes 112; die Form der Innenseite 138 wird hierbei nicht berücksichtigt.

In dieser Ausgestaltung kann das hohle, schlauchförmige Gebilde 112 vollständig oder teilweise ein Objekt, welches in den Hohlraum 134 des hohlen, schlauchförmigen Gebildes 112 eingebracht werden kann, aufnehmen. Hierbei kann das vorzugsweise rohrförmige Objekt zumindest teilweise an der Innenseite 138 des hohlen, schlauchförmigen Gebildes 112 anliegen. Sofern hierbei das Objekt ebenfalls in Form eines flexiblen Körpers vorliegt, kann die entsprechend ausgestattete Auswerteeinrichtung 130 aus den Messwerten aus der Vielzahl der Dehnmessstellen 126 in dem Lichtwellenleiter 116 die Deformation des in das hohle, schlauchförmige Gebilde 112 eingebrachten flexiblen Objekts zu bestimmen. Das hohle, schlauchförmige Gebilde 112 kann so über die Bestimmung der Deformation der Innenseite 138 des hohlen, schlauchförmigen Gebildes 112 gleichzeitig die Deformation des an der Innenseite 138 des hohlen, schlauchförmigen Gebildes 112 anliegenden Objekts ermitteln.

Für weitere Einzelheiten des in Figur 2 dargestellten ersten Ausführungsbeispiels wird auf das in Figur 1 gezeigte Vergleichsbeispiel verwiesen.

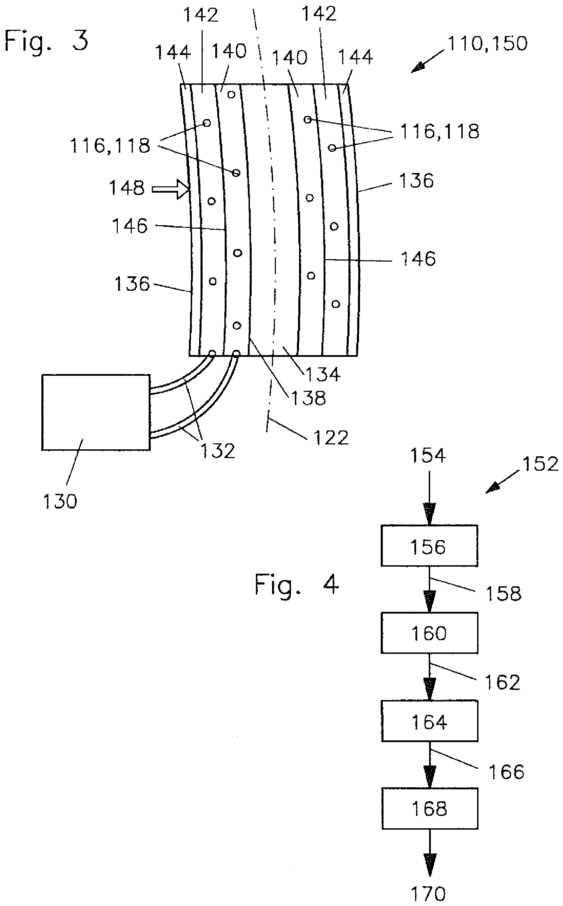

Figur 3 zeigt schematisch die Darstellung eines weiteren Ausführungsbeispiels für die Vorrichtung 110 zur Bestimmung der Deformation einer dreidimensionalen, flexiblen Struktur in Form eines Querschnitts durch das hohle, schlauchförmige Gebilde 112. In diesem Ausführungsbeispiel weist der Trägerkörper 114 zwei voneinander getrennte Schichten 140, 142 auf, welche als innere Schicht 140 und als äußere Schicht 142 bezeichnet werden. Die beiden voneinander getrennte Schichten 140, 142, welche in diesem Ausführungsbeispiel jeweils in Form eines zylindrischen Ringes entlang der zentralen Achse 122 des hohlen, schlauchförmigen Gebildes 112 verlaufen, können vorzugsweise dasselbe oder ein unterschiedliches Trägermaterial aufweisen. Während die innere Schicht 140 an die Innenseite 138 des Hohlraums 134 angrenzt, ist die äußere Schicht 142 mit einer Schutzschicht 144 versehen, welche an die Außenseite 136 des schlauchförmigen Gebildes 112 darstellt. Je nach gewählter Ausführung kann auch auf eine Ausbildung der Schutzschicht 144 verzichtet werden, so dass die äußere Schicht 142 die Außenseite 136 des schlauchförmigen Gebildes 112 bildet (nicht dargestellt). In jeder der beiden voneinander getrennte Schichten 140, 142 ist einer der Lichtwellenleiter 116 jeweils in Form der helikalen Wicklung 118 eingebracht. Jede der beiden Lichtwellenleiter 116 verfügt hierbei über die Vielzahl der Dehnmessstellen 126 in Form der Faser-Bragg-Gitter (FBG) 128 (nicht dargestellt).

In dem vorliegenden Ausführungsbeispiel ist hierbei die äußere Schicht 142 verschiebbar gegenüber der inneren Schicht 140 gelagert. Hierzu ist die innere Schicht 140 durch einen zwischen den beiden Schichten 140, 142 eingebrachten Film 146 aus Gleitflüssigkeit von der äußeren Schicht 142 entkoppelt. Dadurch kann eine Übertragung einer Torsion von der äußeren Schicht 142 auf die innere Schicht 140 vermieden werden kann, wodurch eine torsionsfreie Messung der Deformation des schlauchförmigen Gebildes 112 insbesondere in Bezug auf die zentrale Achse 122 ermöglicht wird. In dieser Ausführung ist es vorteilhaft, wenn die Auswerteeinrichtung 130 weiterhin dazu eingerichtet ist, um aus den Messwerten aus der Vielzahl der Dehnmessstellen 126 den äußeren Druck 148 auf das schlauchförmige Gebilde 112 bestimmen zu können. Dies erfolgt hier durch Aufnahme der Messwerte aus den Dehnmessstellen 126 in dem Lichtwellenleiter 116 der äußeren Schicht 142, welche in dieser Ausgestaltung zusätzlich den äußeren Druck 148 miterfassen, unter Berücksichtigung der Messwerte aus den Dehnmessstellen 126 in des Lichtwellenleiters 116 der inneren Schicht 140, auf die der äußere Druck 148 keinen Einfluss hat. Hierzu wird in der Auswerteeinrichtung 130 eine geeignete Differenzbildung zwischen den Messwerten aus den Dehnmessstellen 126 in dem Lichtwellenleiter 116 der äußeren Schicht 142 und den Messwerten aus den Dehnmessstellen 126 in dem Lichtwellenleiter 116 der inneren Schicht 140 vorgenommen.

Insbesondere in dem in Figur 3 vorliegenden Ausführungsbeispiel eignet sich die vorliegende Vorrichtung 110 als taktile Haut 150 und erlaubt dadurch sowohl eine Erfassung des äußeren Druckes 148 als auch von Vibrationen und/oder der Temperatur, welche auf die Außenseite 136 des schlauchförmigen Gebildes 112 einwirken können. Damit kann in dieser Ausführung die Vorrichtung 110 gleichzeitig als Deformationssensor und/oder als Oberflächensensor fungieren. Alternativ kann die äußere Schicht 142 dazu dienen, um den Einfluss des äußeren Drucks 148 auf die Bestimmung der Deformation des schlauchförmigen Gebildes 112 möglichst weitgehend auszuschließen.

Für weitere Einzelheiten des in Figur 3 dargestellten weiteren Ausführungsbeispiels wird auf die Beschreibung der Figuren 1 und 2 verwiesen.

Figur 4 zeigt schematisch ein Ausführungsbeispiel für ein Verfahren 152 zur Bestimmung der Deformation einer dreidimensionalen, flexiblen Struktur. In diesem Ausführungsbeispiel werden die aus der Vielzahl der Dehnmessstellen 126 bereitgestellten Messwerte 154 gemäß Schritt a) einem Zuordnen 156 zu Punkten auf einer Oberfläche oder einem Volumen des schlauchförmigen Gebildes 112 unterzogen. Hierdurch wird Messinformation an diskreten Orten 158 gewonnen, welche einer lokalen Deformation der Form des schlauchförmigen Gebildes 112 an den Punkten auf der Oberfläche oder dem Volumen des schlauchförmigen Gebildes 112 entspricht. Hieran anschließend erfolgt gemäß Schritt b) ein Interpolieren 160 von Messinformation 162 zwischen den Punkten auf der Oberfläche oder dem Volumen des schlauchförmigen Gebildes 112. Aus der so gewonnen Messinformation 162 erfolgt gemäß Schritt c) ein Bestimmen 164 von Deformationsgradienten bestimmt, woraus eine Deformationsinformation 166 für die Oberfläche oder das Volumen des schlauchförmigen Gebildes 112 erhalten wird. Die Deformationsinformation 166 für die Oberfläche oder das Volumen des schlauchförmigen Gebildes 112 wird gemäß Schritt d) einem in Beziehung 168 zu einer Achse, vorzugsweise zu der zentralen Achse 122, zu einer Oberfläche und/oder zu einem Volumen des schlauchförmigen Gebildes 112 gesetzt.

Unter Berücksichtigung der bekannten Geometrie des schlauchförmigen Gebildes 112 kann so der Formverlauf, vorzugsweise nach der Bogenlänge der zentralen Achse 122, parametrisiert werden kann. Auf diese Weise erfolgt, insbesondere indem der Formverlauf in Bezug auf die zentrale Achse 122 in Beziehung zu einem vorgegebenen der Formverlauf in Bezug auf die zentrale Achse 122 gesetzt wird, ein Bestimmen der Deformation 170 des schlauchförmigen Gebildes 112 aus dem Formverlauf in Bezug auf die zentrale Achse 122. Alternativ oder zusätzlich kann eine Parametrisierung nach einer anderen als der zentralen Achse 122, einem Teil der Oberfläche und/oder des Volumens des schlauchförmigen Gebildes 112 vorgenommen werden.

Sofern das schlauchförmige Gebilde, wie in dem Ausführungsbeispiel gemäß Figur 2 dargestellt, über einen Hohlraum 134 verfügt, welcher vorzugsweise in Bezug auf die zentrale Achse 122 des hohlen, schlauchförmigen Gebildes 112 angeordnet ist, kann die Auswerteeinrichtung zusätzlich die Deformation des hohlen, schlauchförmigen Gebildes 112 auf der Innenseite 138 des hohlen, schlauchförmigen Gebildes 112 bestimmen und, gegebenenfalls eines hieran anliegenden, in den Hohlraum 134 eingebrachten Objekts bestimmen.

Weist das schlauchförmige Gebilde 112, wie in dem Ausführungsbeispiel gemäß Figur 3 dargestellt, zwei voneinander getrennte Schichten 140, 142 auf, so können Messwerte in den Dehnmessstellen 126 in einem der Schicht 142 auf der Außenseite 136 des schlauchförmigen Gebildes 112 verlaufenden Lichtwellenleiter 116 aufgenommen und an die Auswerteeinrichtung 130 weitergeleitet werden können, welche hieraus zusätzlich den äußeren Druck 148 auf das schlauchförmige Gebilde 112 bestimmen kann.

### Bezugszeichenliste

- 110: Vorrichtung
- 112: schlauchförmiges Gebilde
- 114: Trägerkörper
- 116: Lichtwellenleiter
- 118: helikale Wicklung
- 120: Verlauf
- 122: zentrale Achse
- 124: äußere Oberfläche
- 126: Dehnmessstelle
- 128: Faser-Bragg-Gitter (FBG)
- 130: Auswerteeinrichtung
- 132: Verbindung
- 134: Hohlraum
- 136: Außenseite
- 138: Innenseite
- 140: innere Schicht
- 142: äußere Schicht
- 144: Schutzschicht
- 146: Film aus Gleitflüssigkeit
- 148: äußerer Druck
- 150: taktile Haut
- 152: Verfahren
- 154: Messwerte
- 156: Zuordnen zu Punkten
- 158: Messinformation an diskreten Orten
- 160: Interpolieren
- 162: Messinformation
- 164: Bestimmen von Deformationsgradienten
- 166: Deformationsinformation
- 168: In Beziehung setzen
- 170: Deformation

## Patentansprüche

1. Vorrichtung (110) zur Bestimmung einer Deformation (170) einer dreidimensionalen, flexiblen Struktur in Form eines schlauchförmigen Gebildes (112), wobei die Vorrichtung (110) das schlauchförmige Gebilde (112) umfasst, wobei mindestens ein Lichtwellenleiter (116) in das schlauchförmige Gebilde (112) eingebracht ist, der Lichtwellenleiter (116) in Form einer helikalen Wicklung (118) innerhalb des schlauchförmigen Gebildes (112) verläuft, wobei der Lichtwellenleiter (112) über eine Vielzahl von Dehnmessstellen (126) verfügt, wobei die Vorrichtung (110) ferner mindestens eine Auswerteeinrichtung (130) umfasst, wobei die Auswerteeinrichtung (130) dazu eingerichtet ist, um aus Messwerten (154) aus der Vielzahl der Dehnmessstellen (126) die Deformation (170) des schlauchförmigen Gebildes (112) zu bestimmen, wobei die Auswerteeinrichtung (130) ferner dazu eingerichtet ist, um Deformationsinformation (166) aus Werten in Bezug auf die Deformation (170) des schlauchförmigen Gebildes (112), welche lokal als Deformationsgradienten vorliegen, zu ermitteln.

2. Vorrichtung (110) nach dem vorangehenden Anspruch, wobei das schlauchförmige Gebilde (112) hohl in Bezug auf die zentrale Achse (122) des Gebildes (112) ausgestaltet ist und die Auswerteeinrichtung (130) ferner dazu eingerichtet ist, zusätzlich die Deformation (170) auf einer Innenseite (138) des hohlen, schlauchförmigen Gebildes (112) zu bestimmen.

3. Vorrichtung (110) nach einem der vorangehenden Ansprüche, wobei die Auswerteeinrichtung (130) ferner dazu eingerichtet ist, um die aus den Messwerten (154) der Deformation (170) des schlauchförmigen Gebildes (112) ermittelte Deformationsinformation (166) zu einer Achse, einer Oberfläche und/oder einem Volumen des schlauchförmigen Gebildes (112) in Beziehung zu setzen (168).

4. Vorrichtung (110) nach einem der vorangehenden Ansprüche, wobei die Auswerteeinrichtung (130) ferner dazu eingerichtet ist, um eine Zuordnung (156) der Messwerte (154) zu Punkten auf einer Oberfläche oder einem Volumen des schlauchförmigen Gebildes (112) vorzunehmen.

5. Vorrichtung (110) nach Anspruch 2, wobei das hohle, schlauchförmige Gebilde (112) dazu eingerichtet ist, um derart über ein Objekt gezogen zu werden, dass das Objekt zumindest teilweise an der Innenseite (138) des hohlen, schlauchförmigen Gebildes (112) anliegt, wobei die Auswerteeinrichtung (130) ferner dazu eingerichtet ist, um aus den Messwerten (154) aus der Vielzahl der Dehnmessstellen (126) zusätzlich die Deformation (170) des in das hohle, schlauchförmige Gebilde (112) eingebrachten Objekts zu bestimmen.

6. Vorrichtung (110) nach einem der vorangehenden Ansprüche, wobei das schlauchförmige Gebilde (112) über mindestens zwei voneinander getrennte Schichten (140, 142) verfügt, wobei in jeder der mindestens zwei Schichten (140, 142) jeweils mindestens einer der Lichtwellenleiter (116) verläuft, wobei eine innere Schicht (140) innen in Bezug auf die zentrale Achse (122) des schlauchförmigen Gebildes (112) und eine äußere Schicht (142) auf einer Außenseite (136) des hohlen schlauchförmigen Gebildes (112) angeordnet ist.

7. Vorrichtung (110) nach dem vorangehenden Anspruch, wobei die innere Schicht (140) und die äußere Schicht (142) gegeneinander verschiebbar gelagert sind.

8. Vorrichtung (110) nach einem der vorangehenden Ansprüche, wobei die Auswerteeinrichtung (130) ferner dazu eingerichtet ist, um aus den Messwerten (154) aus der Vielzahl der Dehnmessstellen (126) zusätzlich einen äußeren Druck (148) auf das schlauchförmige Gebilde (112) zu bestimmen.

9. Vorrichtung (110) nach einem der vorangehenden Ansprüche, wobei mindestens zwei Lichtwellenleiter (116) vorgesehen sind, wobei zwei der Lichtwellenleiter (116) eine gegenläufige helikale Wicklung (118) zueinander aufweisen.

10. Verfahren (152) zur Bestimmung einer Deformation (170) einer dreidimensionalen, flexiblen Struktur in Form eines schlauchförmigen Gebildes (112), wobei Messwerte (154) an einer Vielzahl von Dehnmessstellen (126), über welche mindestens einen, in Form einer helikalen Wicklung (118) in das schlauchförmige Gebilde (112) eingebrachten Lichtwellenleiter (116) verfügt, erfasst und an mindestens eine Auswerteeinrichtung (130) weitergeleitet werden, wobei die Auswerteeinrichtung (130) aus den Messwerten (154) die Deformation (170) des schlauchförmigen Gebildes (112) bestimmt, wobei die Deformation (170) des schlauchförmigen Gebildes (112) aus den Messwerten (154) gemäß folgenden Schritten bestimmt wird:
a) Zuordnen (156) der Messwerte (154) zu Punkten auf einer Oberfläche oder einem Volumen des schlauchförmigen Gebildes (112);
b) Interpolieren (160) von Messinformation (162) zwischen den Punkten auf der Oberfläche oder in dem Volumen des schlauchförmigen Gebildes (112);
c) Bestimmen (164) von Deformationsgradienten aus der Messinformation (162), wodurch eine Deformationsinformation (166) für die Oberfläche oder das Volumen des schlauchförmigen Gebildes (112) erhalten wird;
d) In Beziehung setzen (168) der Deformationsinformation (166) zu einer Achse, einer Oberfläche und/oder einem Volumen des schlauchförmigen Gebildes (112).

11. Verfahren (152) nach dem vorangehenden Anspruch, wobei das schlauchförmige Gebilde (112) hohl in Bezug auf die Achse des Gebildes (112) ausgestaltet ist und die Auswerteeinrichtung (130) zusätzlich die Deformation des hohlen, schlauchförmigen Gebildes (112) auf der Innenseite (138) des hohlen, schlauchförmigen Gebildes (112) bestimmt.

12. Verfahren (152) nach einem der beiden vorangehenden Ansprüche, wobei das schlauchförmige Gebilde (112) über mindestens zwei voneinander getrennte Schichten (140, 142) verfügt, wobei in jeder der mindestens zwei Schichten (140, 142) jeweils mindestens eine der Lichtwellenleiter (116) verläuft, wobei Messwerte (154) in Dehnmessstellen (126) in einem äußeren Schicht (142) auf einer Außenseite (136) des schlauchförmigen Gebildes (112) verlaufenden Lichtwellenleiter (116) aufgenommen und an die Auswerteeinrichtung (130) weitergeleitet werden.

13. Verfahren (152) nach einem der drei vorangehenden Ansprüche, wobei die Auswerteeinrichtung (130) aus den Messwerten (154) einen äußeren Druck (154) auf das schlauchförmige Gebilde (112) bestimmt.

## Claims

1. Apparatus (110) for determining a deformation (170) of a three-dimensional, flexible structure in form of a tubular construct (112), wherein the apparatus (110) comprises the tubular construct (112), wherein at least one optical waveguide (116) is introduced into the tubular construct (112), the optical waveguide (116) extending in form of a helical winding (118) within the tubular construct (112), wherein the optical waveguide (112) has a plurality of strain measuring points (126), wherein the apparatus (110) further comprises at least one evaluation device (130), wherein the evaluation device (130) is configured to determine the deformation (170) of the tubular construct (112) from measurement values (154) of the plurality of the strain measuring points (126), wherein the evaluation device (130) is further configured to determine deformation information (166) from values related to the deformation (170) of the tubular construct (112) available locally as deformation gradients.

2. Apparatus (110) according to the preceding claim, wherein the tubular construct (112) is hollow in relation to the central axis (122) of the construct (112) and the evaluation device (130) is further configured to additionally determine the deformation (170) on an inner side (138) of the hollow, tubular construct (112).

3. Apparatus (110) according to any one of the preceding claims, wherein the evaluation device (130) is further configured to relate (168) the deformation information (166) ascertained from the measurement values (154) of the deformation (170) of the tubular construct (112) to an axis, a surface and/or a volume of the tubular construct (112) .

4. Apparatus (110) according to any one of the preceding claims, wherein the evaluation device (130) is further configured to assign (156) the measurement values (154) to points on a surface or a volume of the tubular construct (112).

5. Apparatus (110) according to claim 2, wherein the hollow, tubular construct (112) is configured to be pulled over an object in such a way that the object abuts on the inner side (138) of the hollow, tubular construct (112) at least in part, wherein the evaluation device (130) is further configured to additionally determine the deformation (170) of the object introduced into the hollow, tubular construct (112) from the measurement values (154) from the plurality of strain measuring points (126) .

6. Apparatus (110) according to any one of the preceding claims, wherein the tubular construct (112) has at least two individual layers (140, 142), wherein at least one of the optical waveguides (116) in each case extends in each one of the at least two layers (140, 142), wherein an inner layer (140) is arranged on the inside in relation to the central axis (122) of the tubular construct (112) and an outer layer (142) is arranged on an outer side (136) of the hollow tubular construct (112).

7. Apparatus (110) according to the preceding claim, wherein the inner layer (140) and the outer layer (142) are mounted in a manner displaceable with respect to one another.

8. Apparatus (110) according to any one of the preceding claims, wherein the evaluation device (130) is further configured to additionally determine an external pressure (148) on the tubular construct (112) from the measurement values (154) from the plurality of strain measuring points (126) .

9. Apparatus (110) according to any one of the preceding claims, wherein at least two optical waveguides (116) are provided, wherein two of the optical waveguides (116) have an opposing helical winding (118) in relation to one another.

10. Method (152) for determining a deformation (170) of a three-dimensional, flexible structure in the form of a tubular construct (112), wherein measurement values (154) are determined at a plurality of strain measuring points (126), which are comprised by at least one optical waveguide (116) introduced in form of a helical winding (118) into the tubular construct (112), and transmitted to at least one evaluation device (130), wherein the evaluation device (130) determines the deformation (170) of the tubular construct (112) from the measurement values (154), wherein the deformation (170) of the tubular construct (112) is determined from the measurement values (154) according to the following steps:
a) assigning (156) the measurement values (154) to points on a surface or a volume of the tubular construct (112);
b) interpolating (160) measurement information (162) between the points on the surface or in the volume of the tubular construct (112);
c) determining (164) deformation gradients from the measurement information (162), as a result of which deformation information (166) is obtained for the surface or the volume of the tubular construct (112);
d) relating (168) the deformation information (166) to an axis, a surface and/or a volume of the tubular construct (112).

11. Method (152) according to the preceding claim, wherein the tubular construct (112) is hollow in relation to the axis of the construct (112) and the evaluation device (130) additionally determines the deformation of the hollow, tubular construct (112) on the inner side (138) of the hollow, tubular construct (112).

12. Method (152) according to either of the two preceding claims, wherein the tubular construct (112) has at least two individual layers (140, 142), wherein at least one of the optical waveguides (116) in each case extends in each one of the at least two layers (140, 142), wherein measurement values (154) are recorded in strain measuring points (126) in an optical waveguide (116) extending in an outer layer (142) on an outer side (136) of the tubular construct (112) and transmitted to the evaluation device (130).

13. Method (152) according to any one of the three preceding claims, wherein the evaluation device (130) determines an external pressure (154) on the tubular construct (112) from the measurement values (154) .

## Revendications

1. Arrangement (110) pour déterminer une déformation (170) d'une structure tridimensionnelle flexible sous la forme d'un produit (112) en forme de tuyau, l'arrangement (110) comprenant le produit (112) en forme de tuyau, au moins une fibre optique (116) étant introduite dans le produit (112) en forme de tuyau, la fibre optique (116) s'étendant sous la forme d'un enroulement hélicoïdal (118) à l'intérieur du produit (112) en forme de tuyau, la fibre optique (112) disposant d'une pluralité de points de mesure de l'allongement (126), l'arrangement (110) comportant en outre un dispositif d'interprétation (130), le dispositif d'interprétation (130) étant conçu pour déterminer la déformation (170) du produit (112) en forme de tuyau à partir des valeurs mesurées (154) provenant de la pluralité de points de mesure de l'allongement (126), le dispositif d'interprétation (130) étant en outre conçu pour identifier des informations de déformation (166) à partir de valeurs en référence à la déformation (170) du produit (112) en forme de tuyau, lesquelles sont présentes localement en tant que gradients de déformation.

2. Arrangement (110) selon la revendication précédente, le produit (112) en forme de tuyau étant de configuration creuse en référence à l'axe central (122) du produit (112) et le dispositif d'interprétation (130) étant en outre conçu pour déterminer en plus la déformation (170) sur un côté intérieur (138) du produit (112) en forme de tuyau creux.

3. Arrangement (110) selon l'une des revendications précédentes, le dispositif d'interprétation (130) étant en outre conçu pour mettre les informations de déformation (166) identifiées à partir des valeurs mesurées (154) de la déformation (170) du produit (112) en forme de tuyau en relation (168) avec un axe, une surface et/ou un volume du produit (112) en forme de tuyau.

4. Arrangement (110) selon l'une des revendications précédentes, le dispositif d'interprétation (130) étant en outre conçu pour effectuer une association (156) des valeurs mesurées (154) à des points sur une surface ou un volume du produit (112) en forme de tuyau.

5. Arrangement (110) selon la revendication 2, le produit (112) en forme de tuyau creux étant conçu pour être tiré sur un objet de telle sorte que l'objet repose au moins partiellement contre le côté intérieur (138) du produit (112) creux en forme de tuyau, le dispositif d'interprétation (130) étant en outre conçu pour déterminer en plus la déformation (170) de l'objet introduit dans le produit (112) creux en forme de tuyau à partir des valeurs mesurées (154) provenant de la pluralité de points de mesure de l'allongement (126).

6. Arrangement (110) selon l'une des revendications précédentes, le produit (112) en forme de tuyau disposant d'au moins deux couches (140, 142) séparées l'une de l'autre, au moins l'une des fibres optiques (116) s'étendant respectivement dans chacune des au moins deux couches (140, 142), une couche intérieure (140) étant disposée à l'intérieur en référence à l'axe central (122) du produit (112) en forme de tuyau et une couche extérieure (142) sur un côté extérieur (136) du produit (112) creux en forme de tuyau.

7. Arrangement (110) selon la revendication précédente, la couche intérieure (140) et la couche extérieure (142) étant montées coulissantes l'une par rapport à l'autre.

8. Arrangement (110) selon l'une des revendications précédentes, le dispositif d'interprétation (130) étant en outre conçu pour déterminer en plus une pression extérieure (148) sur le produit (112) en forme de tuyau à partir des valeurs mesurées (154) provenant de la pluralité de points de mesure de l'allongement (126).

9. Arrangement (110) selon l'une des revendications précédentes, au moins deux fibres optiques (116) étant présentes, deux des fibres optiques (116) présentant un enroulement hélicoïdal (118) en sens inverse l'une par rapport à l'autre.

10. Procédé (152) pour déterminer une déformation (170) d'une structure tridimensionnelle flexible sous la forme d'un produit (112) en forme de tuyau, des valeurs mesurées (154) étant acquises au niveau d'une pluralité de points de mesure de l'allongement (126), dont dispose au moins une fibre optique (116) introduite dans le produit (112) en forme de tuyau sous la forme d'un enroulement hélicoïdal (118), et étant transmises à au moins un dispositif d'interprétation (130), le dispositif d'interprétation (130) déterminant la déformation (170) du produit (112) en forme de tuyau à partir des valeurs mesurées (154), la déformation (170) du produit (112) en forme de tuyau étant déterminée à partir des valeurs mesurées (154) selon les étapes suivantes :
a) association (156) des valeurs mesurées (154) à des points sur une surface ou un volume du produit (112) en forme de tuyau ;
b) interpolation (160) d'informations de mesure (162) entre les points sur la surface ou dans le volume du produit (112) en forme de tuyau ;
c) détermination (164) de gradients de déformation à partir des informations de mesure (162), moyennant quoi des informations de déformation (166) sont obtenues pour la surface ou le volume du produit (112) en forme de tuyau ;
d) mise en relation (168) des informations de déformation (166) avec un axe, une surface et/ou un volume du produit (112) en forme de tuyau.

11. Procédé (152) selon la revendication précédente, le produit (112) en forme de tuyau étant de configuration creuse en référence à l'axe du produit (112) et le dispositif d'interprétation (130) déterminant en plus la déformation du produit (112) creux en forme de tuyau sur le côté intérieur (138) du produit (112) creux en forme de tuyau.

12. Procédé (152) selon l'une des deux revendications précédentes, le produit (112) en forme de tuyau disposant d'au moins deux couches (140, 142) séparées l'une de l'autre, au moins l'une des fibres optiques (116) s'étendant respectivement dans chacune des au moins deux couches (140, 142), les valeurs mesurées (154) étant relevées dans les points de mesure de l'allongement (126) dans une fibre optique (116) qui s'étend couche extérieure (142) sur un côté extérieur (136) du produit (112) en forme de tuyau, puis transmises au dispositif d'interprétation (130).

13. Procédé (152) selon l'une des trois revendications précédentes, le dispositif d'interprétation (130) déterminant une pression extérieure (154) sur le produit (112) en forme de tuyau à partir des valeurs mesurées (154).
